# EUROPÄISCHE PATENTANMELDUNG

(11) **EP 4 201 669 A1**
(43) Veröffentlichungstag der Anmeldung: **28.06.2023**
(21) Anmeldenummer: 21217464.3
(22) Anmeldetag: 23.12.2021
(51) Int. Cl.: B32B 25/08, B32B 25/16, B32B 27/08, B32B 27/30, B32B 27/32

(54) **DEKORFOLIE**

(71) Anmelder: Akzenta Paneele + Profile GmbH, 56759 Kaisersesch (DE)
(72) Erfinder: HANNIG, Hans-Jürgen, 51427 Bergisch Gladbach (DE); HÜLLENKREMER, Felix, 56076 Koblenz (DE)
(74) Vertreter: Michalski Hüttermann & Partner Patentanwälte mbB

(57) **Zusammenfassung**

Die vorliegende Erfindung betrifft eine Dekorfolie, insbesondere für ein dekoriertes Wand- oder Bodenpaneel, dadurch gekennzeichnet, dass die Dekorfolie eine Drucksubstratfolie mit einer ersten Seite und einer der ersten Seite gegenüberliegenden zweiten Seite, und eine die erste Seite der Drucksubstratfolie kontaktierende Verschleißschutzfolie aufweist, wobei auf die zweite Seite der Drucksubstratfolie zumindest teilweise ein Dekor aufgebracht ist. Ferner betrifft die Erfindung ein Verfahren zur Herstellung der Dekorfolie, mittel zur Durchführung des Verfahrens, ein Verfahren zur Herstellung eines Dekorpaneels aufweisend die Dekorfolie und ein Dekorpaneel hergestellt nach dem Verfahren.

## Beschreibung

Die vorliegende Erfindung betrifft eine Dekorfolie, insbesondere für ein dekoriertes Wand- oder Bodenpaneel, wobei die Dekorfolie eine Drucksubstratfolie mit einer ersten Seite und einer der ersten Seite gegenüberliegenden zweiten Seite, und eine die erste Seite der Drucksubstratfolie kontaktierende Verschleißschutzfolie aufweist, wobei auf die zweite Seite der Drucksubstratfolie zumindest teilweise ein Dekor aufgebracht ist.

Gegenstand der vorliegenden Erfindung ist ferner ein Verfahren zur Herstellung einer erfindungsgemäßen Dekorfolie, eine Vorrichtung zur Durchführung des Verfahrens, ein Verfahren zur Herstellung eines Dekorpaneels aufweisend die erfindungsgemäße Dekorfolie, sowie ein Dekorpaneel hergestellt nach dem erfindungsgemäßen Verfahren.

Unter dem Begriff Dekorpaneel sind im Sinne der Erfindung Wand-, Decken, Tür- oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag, zum Verkleiden von Decken, Wänden oder Türen.

Beispiele für solche nachempfundenen Naturwerkstoffe sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden. Zum Schutz der aufgebrachten Dekorschicht sind in der Regel Verschleiß- oder Deckschichten oberhalb der Dekorschicht aufgebracht.

Dekorpaneele werden vielfach als Laminate hergestellt, bei welchen beispielsweise auf eine Trägerplatte ein mit einem gewünschten Dekor vorbedrucktes Dekorpapier aufgebracht wird, auf welches dann wiederum ein sogenanntes Overlay aufgebracht wird. Nachdem gegebenenfalls noch auf der dem Dekorpapier gegenüberliegenden Seite der Trägerplatte ein Gegenzugpapier aufgebracht wurde, wird der erhaltene Schichtenaufbau unter Verwendung geeigneter druck- und/oder wärmeaktivierter Klebemittel fest miteinander verbunden.

Dekorfolien sind ebenfalls an sich bekannt und können beispielsweise auf Trägerplatten laminiert werden um Dekorpaneele zu erhalten. Ein Problem bekannter Dekorfolien kann sein, dass die Folie einerseits ausreichenden Verschleißschutz bieten soll und zugleich gut bedruckbar sein muss und außerdem gut mit einem Träger verbindbar sein soll. Gerade im Bereich von Dekorfolien, die diese Eigenschaften alle erfüllen sollen besteht noch Entwicklungspotential.

Es ist die Aufgabe der vorliegenden Erfindung, eine verbesserte Dekorfolie bereitzustellen, welche sich insbesondere für dekorierte Wand- oder Bodenpaneele eignet.

Gelöst wird diese Aufgabe durch ein Dekorpaneel gemäß Anspruch 1, durch ein Verfahren gemäß Anspruch 11, eine Vorrichtung nach Anspruch 12, ein Verfahren nach Anspruch 13, sowie ein Dekorpaneel nach Anspruch 15.

Mit der Erfindung wird somit eine Dekorfolie, insbesondere für ein dekoriertes Wand- oder Bodenpaneel, vorgeschlagen, wobei die Dekorfolie eine Drucksubstratfolie mit einer ersten Seite und einer der ersten Seite gegenüberliegenden zweiten Seite, und eine die erste Seite der Drucksubstratfolie kontaktierende Verschleißschutzfolie aufweist, wobei auf die zweite Seite der Drucksubstratfolie zumindest teilweise ein Dekor aufgebracht ist.

Überraschenderweise wurde gefunden, dass das eine derartige Dekorfolie besonders gut herstellbar ist, sowie ebenfalls eine besonders gute Verarbeitbarkeit aufweist. Zudem weist eine derartige Dekorfolie bei vergleichsweise geringem Rohstoffverbrauch besonders gute Verschleißeigenschaften auf. Ohne an eine Theorie gebunden zu sein, wird insbesondere davon ausgegangen, dass die Dekorfolie, dadurch, dass das Dekor auf die zweite Seite der Drucksubstratfolie aufgebracht ist und die Verschleißschutzfolie die erste Seite der Drucksubstratfolie kontaktiert die vorteilhaften Eigenschaften aufweist. Der vergleichsweise geringe Rohstoffverbrauch bei besonders guten Verschleißeigenschaften kann sich dabei besonders dadurch ergeben, dass sowohl die Drucksubstratfolie als auch die Verschleißschutzfolie bei späterer Aufbringung der Dekorfolie den Druck schützen. Im Vergleich würde eine Dekorfolie aufweisend das Dekor auf der ersten Seite der Drucksubstratfolie eine insgesamt dickere Verschleißschutzfolie benötigen. Somit kann die Verschleißschutzfolie dünner und entsprechend rohstoffsparender ausgewählt werden, weil die Drucksubstratfolie ebenfalls als Verschleißschutz agiert. Zugleich kann sich die gute Verarbeitbarkeit dadurch ergeben, dass die Drucksubstratfolie dünn sein kann, so dass insbesondere Drucker zum Aufbringen des Dekors verwendet werden können, die nur eine geringe Masse der bedruckten Bahnen erlauben, um Bahnzugschwankungen zu noch ausgleichen zu können und gleichzeitig hohe Druckgeschwindigkeiten erlauben. Ferner kann die Dekorfolie besonders gut Verarbeitbar sein, weil sie direkt auf einen entsprechenden Träger aufgebracht werden kann. Überraschend wurde gefunden, dass die Dekorfolie dabei gut auf einen entsprechenden Träger aufgebracht werden kann, obwohl diejenige Seite, mit der die Folie aufgebracht wird, mit der Dekorschicht versehen ist. Ohne an eine Theorie gebunden zu sein, wird insbesondere davon ausgegangen, dass die Drucksubstratfolie beim Aufbringen auf einen Träger sich mit dem Träger durch die Druckschicht hindurch physikalisch vernetzt. Somit können die vorgenannten Vorteile erreicht werden, wobei insbesondere überraschend keine besonderen Nachteile bei der Aufbringung der Dekorfolie gefunden werden konnten.

Unter dem Begriff "Dekorfolie" ist dabei im Sinne der Erfindung insbesondere eine Folie zu verstehen, die aufbringbar auf Paneele oder anderen Werkstoff sein kann, ein visuell wahrnehmbares Dekor aufweist und gegen Verschleiß schützt. Insoweit die Dekorfolie Teil von beispielsweise einem Dekorpaneel ist, kann unter dem Begriff Dekorfolie insbesondere auch eine Dekorschicht verstanden werden.

Unter dem Begriff "Drucksubstratfolie" ist dabei im Sinne der Erfindung insbesondere eine Folie zu verstehen, auf die ein Dekor aufgedruckt werden kann. Insoweit die Drucksubstratfolie Teil der Dekorfolie ist kann unter dem Begriff Drucksubstratfolie insbesondere auch eine Drucksubstratschicht verstanden werden.

Unter dem Begriff "Verschleißschutzfolie" ist dabei im Sinne der Erfindung insbesondere eine Folie zu verstehen, die gegen Verschleiß schützt, insbesondere gegen den Verschleiß der Oberfläche der Dekorfolie. Insoweit die Verschließschutzfolie Teil der Dekorfolie ist kann unter dem Begriff Verschleißschutzfolie insbesondere auch eine Verschleißschutzschicht verstanden werden.

Die vorbeschriebene Dekorfolie weist somit insbesondere eine verbesserte und rohstoffsparende Herstellbarkeit auf und zudem eine gute Verarbeitbarkeit, sowie gute Verschleißeigenschaften.

Bevorzugt kann vorgesehen sein, dass die Drucksubstratfolie und/oder die Verschleißschutzfolie im Wesentlichen transparent sind. Dadurch kann vorteilhafterweise erreicht werden, dass das auf die zweite Seite der Drucksubstratfolie aufgebrachte Dekor durch die Drucksubstratfolie bzw. die Verschleißschutzfolie sichtbar ist.

Bevorzugt kann vorgesehen sein, dass die Drucksubstratfolie und die Verschließschutzfolie jeweils ein erstes Polymer aufweisen, wobei das erstes Polymer bevorzug ein Vinylpolymer aufweist, mehr bevorzugt ein propylenbasiertes Vinylpolymer, besonders bevorzugt ein Polypropylen-Copolymer.

Insbesondere derartige Polymere bieten den Vorteil, dass die aus ihnen hergestellten Produkte sehr leicht rezykliert werden können. Hierdurch kann sich beispielsweise auch eine Senkung der Herstellungskosten ergeben.

Im Sinne der vorliegenden Erfindung sind unter dem Begriff "Vinylpolymer" Polymere aus Monomeren zu verstehen, bei denen zumindest ein Teil der Monomere eine Vinylgruppe aufweist. Eine Vinylgruppe im Sinne der vorliegenden Anmeldung wird auch Ethenylgruppe genannt. Bevorzugt wird im Sinne der vorliegenden Erfindung unter dem Begriff "Vinylpolymer" ein halogenidfreies Vinylpolymer verstanden.

Bevorzugt kann vorgesehen sein, dass das erste Polymer ein Polypropylen-Copolymer mit zufälliger Verteilung ist.

Bevorzugt kann vorgesehen sein, dass die Drucksubstratfolie zumindest eine B-Schicht aufweist, wobei die B-Schicht bevorzugt das erstes Polymer aufweist.

In anderen Worten kann somit vorgesehen sein, dass die Drucksubstratfolie ein Schicht aufweist, die das erste Polymer aufweist. Dadurch kann insbesondere erreicht werden, dass die Eigenschaften der Drucksubstratfolie durch die Wahl des ersten Polymers eingestellt werden können.

Bevorzugt kann vorgesehen sein, dass die B-Schicht das erste Polymer aufweist in einer Menge in einem Bereich von größer oder gleich 50 Gew.-% bis kleiner oder gleich 100 Gew.-%, bezogen auf das Gesamtgewicht der B-Schicht, bevorzugt größer oder gleich 60 Gew.-%, mehr bevorzugt größer oder gleich 70 Gew.-%, mehr bevorzugt größer oder gleich 80 Gew.-%, mehr bevorzugt größer oder gleich 90 Gew.-%, noch mehr bevorzugt größer oder gleich 95 Gew.-%, besonders bevorzugt größer oder gleich 99 Gew.-% bis kleiner oder gleich 100 Gew.-%.

Bevorzugt kann vorgesehen sein, dass die Drucksubstratfolie zumindest eine Schicht aufweist, ausgewählt aus der Gruppe bestehend aus einer A-Schicht und einer C-Schicht, wobei die A-Schicht ein zweites Polymer aufweist und die C-Schicht ein drittes Polymer aufweist.

In anderen Worten kann somit vorgesehen sein, dass die Drucksubstratfolie eine Schicht aufweisend das zweite Polymer aufweist, eine Schicht aufweisend das dritte Polymer aufweist oder eine Schicht aufweisend das zweite Polymer und eine Schicht aufweisend das dritte Polymer aufweist. Dadurch kann erreicht werden, dass die Eigenschaften der Drucksubstratfolie besonders flexibel eingestellt werden können. Insbesondere kann dadurch erreicht werden, dass die Eigenschaften der ersten und zweiten Seite der Drucksubstratfolie einstellbar sind.

Bevorzugt kann vorgesehen sein, dass die A-Schicht das zweite Polymer aufweist in einer Menge in einem Bereich von größer oder gleich 50 Gew.-% bis kleiner oder gleich 100 Gew.-%, bezogen auf das Gesamtgewicht der A-Schicht, bevorzugt größer oder gleich 60 Gew.-%, mehr bevorzugt größer oder gleich 70 Gew.-%, mehr bevorzugt größer oder gleich 80 Gew.-%, mehr bevorzugt größer oder gleich 90 Gew.-%, noch mehr bevorzugt größer oder gleich 95 Gew.-%, besonders bevorzugt größer oder gleich 99 Gew.-% bis kleiner oder gleich 100 Gew.-%.

Bevorzugt kann vorgesehen sein, dass die C-Schicht das dritte Polymer aufweist in einer Menge in einem Bereich von größer oder gleich 50 Gew.-% bis kleiner oder gleich 100 Gew.-%, bezogen auf das Gesamtgewicht der C-Schicht, bevorzugt größer oder gleich 60 Gew.-%, mehr bevorzugt größer oder gleich 70 Gew.-%, mehr bevorzugt größer oder gleich 80 Gew.-%, mehr bevorzugt größer oder gleich 90 Gew.-%, noch mehr bevorzugt größer oder gleich 95 Gew.-%, besonders bevorzugt größer oder gleich 99 Gew.-% bis kleiner oder gleich 100 Gew.-%.

Bevorzugt kann vorgesehen sein, dass das zweite Polymer ein Vinylpolymer aufweist, bevorzugt ein Vinyl-Copolymer, mehr bevorzugt ein Vinyl-Copolymer ausgewählt aus der Gruppe bestehend aus einem propylenbasiertem Vinyl-Copolymer, einem Vinyl-Terpolymer und Mischungen davon, besonders bevorzugt ausgewählt aus der Gruppe bestehend aus einem Propylen-Ethylen-Random-Copolymer, einem Polypropylen-Ethylen-Butylen-Copolymer, einem Ethylen-Propylen-Dien-Monomer Kautschuk und Mischungen davon.

Dadurch kann erreicht werden, dass der Druck besonders gut auf die Drucksubstratfolie aufgebracht ist und/oder die Verschleißschutzfolie besonders gut mit der Drucksubstratfolie verbunden ist.

Bevorzugt kann vorgesehen sein, dass das zweite Polymer ein thermoplastisches Vinylpolymer ist.

Bevorzugt kann vorgesehen sein, dass das Propylen-Ethylen-Random-Copolymer einen Ethylengehalt aufweist in einem Bereich von größer oder gleich 1 Gew.-% bis kleiner oder gleich 10 Gew.-%, bezogen auf das Propylen-Ethylen-Random-Copolymer, bevorzugt größer oder gleich 2 Gew.-% bis kleiner oder gleich 6 Gew.-%, beispielsweise 4 Gew.-%.

Bevorzugt kann vorgesehen sein, dass das Propylen-Ethylen-Random-Copolymer eine Vicat Erweichungstemperatur (A50) gemessen nach ISO 306 aufweist in einem Bereich von größer oder gleich 90 °C bis kleiner oder gleich 120°C, bevorzugt größer oder gleich 100 °C bis kleiner oder gleich 110 °C.

Bevorzugt kann vorgesehen sein, dass das Polypropylen-Ethylen-Butylen-Copolymer einen Schmelzpunkt gemessen nach ISO 11357-3 aufweist in einem Bereich von größer oder gleich 110 °C bis kleiner oder gleich 150 °C, bevorzugt größer oder gleich 120 °C bis kleiner oder gleich 130 °C.

Bevorzugt kann vorgesehen sein, dass das Polypropylen-Ethylen-Butylen-Copolymer eine Vicat Erweichungstemperatur (A50) gemessen nach ISO 306 aufweist in einem Bereich von größer oder gleich 80 °C bis kleiner oder gleich 110°C, bevorzugt größer oder gleich 90 °C bis kleiner oder gleich 100 °C.

Bevorzugt kann vorgesehen sein, dass die Schmelzflussraten MFR (230 °C, 2,16 kg) des ersten Polymers und des zweite Polymers gemessen nach EN ISO 1133-1, einen Differenzbetrag zueinander aufweisen von kleiner oder gleich 3 g/10 min, bevorzugt kleiner oder gleich 2 g/10 min, besonders bevorzugt kleiner oder gleich 1 g/10 min.

Bevorzugt kann vorgesehen sein, dass das dritte Polymer einen Haftvermittler aufweist, bevorzugt einen Haftvermittler ausgewählt aus der Gruppe bestehend aus einem Maleinsäureanhydrid gepfropften Polymer, einem ethylenbasiertem Copolymer und Mischungen davon, besonders bevorzugt ausgewählt aus der Gruppe bestehend aus einem Maleinsäureanhydrid gepfropfte Polypropylen, einem Maleinsäureanhydrid gepfropfte Polyethylen, einem Ethyl-Acrylsäure-Copolymer, einem Ethyl-(Meth)acrylat, einem Ethyl-Butylacrylat, einem Ethyl-Vinylacetat und Mischungen davon.

Bevorzugt kann vorgesehen sein, dass das Maleinsäureanhydrid gepfropfte Polypropylen eine Vicat Erweichungstemperatur (A50) gemessen nach ISO 306 aufweist in einem Bereich von größer oder gleich 100 °C bis kleiner oder gleich 140°C, bevorzugt größer oder gleich 115 °C bis kleiner oder gleich 125 °C.

Bevorzugt kann vorgesehen sein, dass das Maleinsäureanhydrid gepfropfte Polypropylen einen Schmelzpunkt gemessen nach ISO 11357-3 aufweist in einem Bereich von größer oder gleich 130 °C bis kleiner oder gleich 160 °C, bevorzugt größer oder gleich 140 °C bis kleiner oder gleich 150 °C.

Bevorzugt kann vorgesehen sein, dass das Maleinsäureanhydrid gepfropfte Polyethylen eine Vicat Erweichungstemperatur (A50) gemessen nach ISO 306 aufweist in einem Bereich von größer oder gleich 50 °C bis kleiner oder gleich 120 °C, beispielsweise größer oder gleich 60 °C bis kleiner oder gleich 70 °C oder größer oder gleich 80 °C bis kleiner oder gleich 85 °C.

Bevorzugt kann vorgesehen sein, dass das Maleinsäureanhydrid gepfropfte Polyethylen einen Schmelzpunkt gemessen nach ISO 11357-3 aufweist in einem Bereich von größer oder gleich 100 °C bis kleiner oder gleich 130 °C, bevorzugt größer oder gleich von 110 °C bis kleiner oder gleich 120 °C.

Bevorzugt kann vorgesehen sein, dass das Ethyl-Acrylsäure-Copolymer einen Acrylsäureanteil aufweist in einem Bereich von größer oder gleich 1 Gew.-% bis kleiner oder gleich 10 Gew.-%, bezogen auf das Gesamtgewicht des Ethyl-Acrylsäure-Copolymers, bevorzugt größer oder gleich 5 Gew.-% bis kleiner oder gleich 7 Gew.-%.

Bevorzugt kann vorgesehen sein, dass das Ethyl-Acrylsäure-Copolymer einen Schmelzpunkt gemessen nach ISO 11357-3 aufweist in einem Bereich von größer oder gleich 85 °C bis kleiner oder gleich 115 °C, bevorzugt größer oder gleich 95 °C bis kleiner oder gleich 105 °C.

Bevorzugt kann vorgesehen sein, dass das Ethyl-(Meth)acrylat einen Methylacrylatanteil aufweist in einem Bereich von größer oder gleich 10 Gew.-% bis kleiner oder gleich 30 Gew.-%, bezogen auf das Gesamtgewicht des Ethyl-(Meth)acrylats, bevorzugt größer oder gleich 20 Gew.-% bis kleiner oder gleich 25 Gew.-%.

Bevorzugt kann vorgesehen sein, dass das Ethyl-(Meth)acrylat einen Schmelzpunkt gemessen nach ISO 11357-3 aufweist in einem Bereich von größer oder gleich 65 °C bis kleiner oder gleich 95 °C, bevorzugt größer oder gleich 75 °C bis kleiner oder gleich 85 °C.

Bevorzugt kann vorgesehen sein, dass das Ethyl-Butylacrylat einen Schmelzpunkt gemessen nach ISO 11357-3 aufweist in einem Bereich von größer oder gleich 80 °C bis kleiner oder gleich 110 °C, bevorzugt größer oder gleich 90 °C bis kleiner oder gleich 100 °C.

Bevorzugt kann vorgesehen sein, dass das Ethyl-Butylacrylat eine Vicat Erweichungstemperatur (A50) gemessen nach ISO 306 aufweist in einem Bereich von größer oder gleich 45 °C bis kleiner oder gleich 75 °C, bevorzugt größer oder gleich 55 °C bis kleiner oder gleich 65 °C.

Bevorzugt kann vorgesehen sein, dass das Ethyl-Vinylacetat einen Vinylacetatanteil aufweist in einem Bereich von größer oder gleich 5 Gew.-% bis kleiner oder gleich 25 Gew.-%, bezogen auf das Gesamtgewicht des Ethyl-Vinylacetats, bevorzugt größer oder gleich 10 Gew.-% bis kleiner oder gleich 15 Gew.-%.

Bevorzugt kann vorgesehen sein, dass das Ethyl-Vinylacetat einen Schmelzpunkt gemessen nach ISO 11357-3 aufweist in einem Bereich von größer oder gleich 75 °C bis kleiner oder gleich 105 °C, bevorzugt größer oder gleich 85 °C bis kleiner oder gleich 95 °C.

Bevorzugt kann vorgesehen sein, dass das Ethyl-Vinylacetat eine Vicat Erweichungstemperatur (A50) gemessen nach ISO 306 aufweist in einem Bereich von größer oder gleich 45 °C bis kleiner oder gleich 75 °C, bevorzugt größer oder gleich 55 °C bis kleiner oder gleich 65 °C.

Dadurch kann erreicht werden, dass der Druck besonders gut auf die Drucksubstratfolie aufgebracht ist und/oder die Verschleißschutzfolie besonders gut mit der Drucksubstratfolie verbunden ist.

Bevorzugt kann vorgesehen sein, dass die A-Schicht eine Mischung aus dem zweiten Polymer und ersten Polymer aufweist. Dadurch kann insbesondere eine Haftung zwischen verschiedenen Schichten der Drucksubstratfolie verbessert werden.

Bevorzugt kann vorgesehen sein, dass die C-Schicht eine Mischung aus dem dritten Polymer und ersten Polymer aufweist. Dadurch kann insbesondere eine Haftung zwischen verschiedenen Schichten der Drucksubstratfolie verbessert werden

Bevorzugt kann vorgesehen sein, dass die Drucksubstratfolie eine Mehrzahl von Schichten aufweist, wobei die Schichten ausgewählt sind aus A-Schichten, B-Schichten und C-Schichten. Dadurch kann erreicht werden, dass die Eigenschaften der Drucksubstratfolie besonders gut einstellbar sind.

Bevorzugt kann vorgesehen sein, dass die Drucksubstratfolie mehr als eine, insbesondere mehr als zwei, beispielsweise drei Schichten aufweist.

Bevorzugt kann vorgesehen sein, dass die Drucksubstratfolie eine Mehrzahl von Schichten aufweist, wobei bevorzugt zumindest eine der Schichten eine B-Schicht ist. Dadurch kann erreicht werden, dass die Drucksubstratfolie insgesamt beispielsweise besonders Reißfest ist und gut verarbeitbar.

Bevorzugt kann vorgesehen sein, dass die Drucksubstratfolie eine Mehrzahl von Schichten aufweist und die Mehrzahl von Schichten eine Schichtreihenfolge aufweist zwischen der ersten Seite der Drucksubstratfolie und der zweiten Seite der Drucksubstratfolie, ausgewählt aus den Schichtreihenfolgen A-B, B-A, B-B-B, A-B-C, A-B-A, A-B-B, A-B-C-B-A, A-B-C-B-B, und A-B-C-B-C, wobei die Schichtreihenfolge bevorzugt ausgewählt ist aus den Schichtreihenfolgen B-B-B, A-B-C, und A-B-A.

Darunter ist zu verstehen, dass die Schichten der Drucksubstratfolie ausgehend von der ersten Seite der Drucksubstratfolie in der angegebenen Reihenfolge A-, B-, bzw. C-Schichten aufweisen. Besonders bevorzugt besteht die Drucksubstratfolie aus den Schichten in der angegebenen Reihenfolge. In anderen Worten ist darunter beispielsweise zu verstehen, dass die Drucksubstratfolie bei einer Schichtreihenfolge von A-B-C ausgehend von der ersten Seite der Drucksubstratfolie eine A-Schicht aufweist, gefolgt von einer B-Schicht, die wiederum von einer C-Schicht gefolgt wird, wobei insbesondere die C-Schicht dann die zweite Seite der Drucksubstratfolie bildet, auf die das Dekor aufgebracht ist.

In einer bevorzugten Ausgestaltung kann vorgesehen sein, dass die Drucksubstratfolie weniger als vier, bevorzugt weniger als drei, beispielsweise genau eine oder genau zwei Schichten aufweist. In einer bevorzugten Ausgestaltung kann vorgesehen sein, dass die Drucksubstratfolie aus einer B-Schicht besteht. In einer alternativen, bevorzugten Ausgestaltung kann vorgesehen sein, dass die Drucksubstratfolie aus zwei Schichten besteht, wobei die zwei Schichten eine Schichtreihenfolge aufweisen zwischen der ersten Seite der Drucksubstratfolie und der zweiten Seite der Drucksubstratfolie von A-B oder B-A, insbesondere von A-B.

Dadurch kann erreicht werden, dass die Herstellung der Dekorfolie besonders einfach ist.

Bevorzugt kann vorgesehen sein, dass das auf die zweite Seite der Drucksubstratfolie zumindest teilweise aufgebrachte Dekor, ein eine Dekorvorlage nachbildendes Dekor umfasst.

Das Dekor kann beispielsweise einen Naturwerkstoff nachempfinden. Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere ein derartiger originaler Naturwerkstoff beziehungsweise zumindest eine Oberfläche eines solchen verstanden werden, der durch das Dekor imitiert beziehungsweise nachempfunden werden soll.

Das Dekor kann bevorzugt eine Dicke aufweisen in einem Bereich von ≥ 5µm bis ≤ 10µm.

Bevorzugt kann vorgesehen sein, dass die Drucksubstratfolie auf der zweiten Seite eine A-Schicht, eine C-Schicht, und/oder eine B-Schicht aufweist.

Für den Fall das die zweite Seite der Drucksubstratfolie eine A-Schicht oder eine C-Schicht ist, kann vorteilhafterweise das Dekor direkt auf die zweite Seite der Drucksubstratfolie aufgebracht sein.

Für den Fall das die zweite Seite der Drucksubstratfolie eine B-Schicht ist, kann vorgesehen sein, dass zwischen der zweiten Seite der Drucksubstratfolie und dem aufgebrachten Dekor eine Primerschicht angeordnet ist. Dadurch kann vorteilhafterweise erreicht werden, dass das Dekor besonders gut an der Drucksubstratfolie haftet. Beispielsweise kann vorgesehen sein, dass die Primerschicht einen polyurethanbasierten Primer aufweist.

Bevorzugt kann vorgesehen sein, dass die Drucksubstratfolie eine Dicke aufweist von größer oder gleich 5 µm bis kleiner oder gleich 500 µm, bevorzugt größer oder gleich 20 µm bis kleiner oder gleich 400 µm, mehr bevorzugt größer oder gleich 50 µm bis kleiner oder gleich 300 µm, besonders bevorzugt größer oder gleich 100 µm bis kleiner oder gleich 200 µm.

Dadurch kann erreicht werden, dass die Dekorfolie ganz besonders gut herstellbar ist. Insbesondere kann dadurch erreicht werden, dass das Aufbringen des Dekors auf die Drucksubstratfolie technisch besonders gut umsetzbar ist.

Bevorzugt kann vorgesehen sein, dass die Drucksubstratfolie eine biaxial gereckte Polypropylenfolie, insbesondere mit einer Dicke in einem bereich von größer oder gleich 5 µm bis kleiner oder gleich 80 µm, eine uniaxial gereckte Polypropylenfolie, insbesondere mit einer Dicke in einem Bereich von größer oder gleich 50 µm bis kleiner oder gleich 150 µm, oder eine ungereckte Polypropylenfolie, insbesondere mit einer Dicke in einem Bereich von größer oder gleich 50 µm bis kleiner oder gleich 300 µm umfasst. Es konnte gezeigt werden, dass sich diese besonders gut als Drucksubstratfolien eignen und sich besonders gut verarbeiten lassen, sowie gut rezyklierbar sind.

Bevorzugt kann vorgesehen sein, dass die Verschleißschutzfolie zumindest eine B-Schicht aufweist, wobei die B-Schicht bevorzugt das erstes Polymer aufweist. Dadurch kann erreicht werden, dass auch die Eigenschaften der Verschleißschutzfolie durch die Wahl des ersten Polymers eingestellt werden können. Für die weiteren Merkmale der B-Schicht und des ersten Polymers wird auf die Beschreibung der Drucksubstratfolie verwiesen. In einer bevorzugten Ausgestaltung kann die B-Schicht der Drucksubstratfolie und die B-Schicht der Verschleißschutzfolie gleich ausgewählt sein.

Bevorzugt kann vorgesehen sein, dass die Verschleißschutzfolie zumindest eine Schicht aufweist, ausgewählt aus der Gruppe bestehend aus einer A-Schicht und einer C-Schicht, wobei die A-Schicht das zweites Polymer aufweist und die C-Schicht das drittes Polymer aufweist. Für die weiteren Merkmale der A-Schicht und C-Schicht und des zweiten und dritten Polymers wird auf die Beschreibung der Drucksubstratfolie verwiesen. In einer bevorzugten Ausgestaltung kann die A-Schicht der Drucksubstratfolie und die A-Schicht der Verschleißschutzfolie gleich ausgewählt sein und/oder die C-Schicht der Drucksubstratfolie und die C-Schicht der Verschleißschutzfolie gleich ausgewählt sein.

In anderen Worten kann somit vorgesehen sein, dass die Verschleißschutzfolie eine Schicht aufweisend das zweite Polymer aufweist, eine Schicht aufweisend das dritte Polymer aufweist oder eine Schicht aufweisend das zweite Polymer und eine Schicht aufweisend das dritte Polymer aufweist. Dadurch kann erreicht werden, dass die Eigenschaften der Verschleißschutzfolie besonders flexibel eingestellt werden können. Insbesondere kann dadurch erreicht werden, dass die Eigenschaften der Oberfläche der Dekorfolie und der Seite der Verschleißschutzfolie, die die Drucksubstratfolie kontaktiert einstellbar sind.

Bevorzugt kann vorgesehen sein, dass die Verschleißschutzfolie eine Mehrzahl von Schichten aufweist, wobei die Schichten ausgewählt sind aus A-Schichten, B-Schichten und C-Schichten, insbesondere aus A-Schichten und B-Schichten.

In einer bevorzugten Ausgestaltung kann vorgesehen sein, dass die Verschleißschutzfolie mehr als eine, insbesondere mehr als zwei, beispielsweise drei Schichten aufweist

In einer bevorzugten Ausgestaltung kann vorgesehen sein. Dass die Verschließschutzfolie eine Mehrzahl von Schichten aufweist, wobei bevorzugt zumindest eine der Schichten eine B-Schicht ist.

Bevorzugt kann vorgesehen sein, dass die Verschleißschutzfolie eine Mehrzahl von Schichten aufweist und die Mehrzahl von Schichten eine Schichtreihenfolge aufweist von einer Seite der Verschleißschutzfolie zur gegenüberliegenden Seite der Verschleißschutzfolie, die die Drucksubstratfolie kontaktiert, ausgewählt aus den Schichtreihenfolgen A-B, B-A, A-B-A, AB-C, B-B-A, A-B-B, und C-B-A, insbesondere B-B-A.

Darunter ist zu verstehen, dass die Schichten der Verschleißschutzfolie ausgehend von der einen Seite der Verschleißschutzfolie in der angegebenen Reihenfolge A-, B-, bzw. C-Schichten aufweisen. Besonders bevorzugt besteht die Verschleißschutzfolie aus den Schichten in der angegebenen Reihenfolge. In anderen Worten ist darunter beispielsweise zu verstehen, dass die Verschleißschutzfolie bei einer Schichtreihenfolge von A-B-C ausgehend von der einen Seite der Verschleißschutzfolie eine A-Schicht aufweist, gefolgt von einer B-Schicht, die wiederum von einer C-Schicht gefolgt wird, wobei insbesondere die C-Schicht dann die erste Seite der Drucksubstratfolie kontaktiert.

In einer bevorzugten Ausgestaltung kann vorgesehen sein, dass die Verschleißschutzfolie weniger als vier, bevorzugt weniger als drei, beispielsweise genau eine oder genau zwei Schichten aufweist. In einer bevorzugten Ausgestaltung kann vorgesehen sein, dass die Verschleißschutzfolie nur eine Schicht aufweist, bevorzugt eine B-Schicht. In einer bevorzugten Ausgestaltung kann vorgesehen sein, dass die Verschleißschutzfolie aus einer B-Schicht besteht. In einer alternativen, bevorzugten Ausgestaltung kann vorgesehen sein, dass die Verschleißschutzfolie aus zwei Schichten besteht, wobei die zwei Schichten eine Schichtreihenfolge aufweisen von einer Seite der Verschleißschutzfolie zur gegenüberliegenden Seite der Verschleißschutzfolie, die die Drucksubstratfolie kontaktiert, von A-B oder B-A, insbesondere von B-A.

Dadurch kann erreicht werden, dass die Herstellung der Dekorfolie besonders einfach ist.

Bevorzugt kann vorgesehen sein, dass die Verschleißschutzfolie eine Oberflächenstrukturierung aufweist, beispielsweise eine All-Over-Struktur oder eine Struktur, die zumindest teilweise synchron zum Dekor ausgestaltet ist. Dadurch kann mit der Dekorfolie eine besonders wertig anmutende Oberfläche erzeugt werden.

Bevorzugt kann vorgesehen sein, dass die Drucksubstratfolie und die Verschleißschutzfolie zusammen eine Dicke aufweisen in einem Bereich größer oder gleich 50 µm bis kleiner oder gleich 1000 µm, bevorzugt größer oder gleich 100 µm bis kleiner oder gleich 750 µm, bevorzugt größer oder gleich 200 µm bis kleiner oder gleich 600 µm, besonders bevorzugt größer oder gleich 300 µm bis kleiner oder gleich 500 µm.

Dadurch kann erreicht werden, dass die Dekorfolie insgesamt den Anforderungen für Verschleißschutzfolien besonders gut entspricht.

Bevorzugt kann vorgesehen sein, dass die Drucksubstratfolie und die Verschleißschutzfolie zusammen weniger als sechs, bevorzugt weniger als fünf, besonders bevorzugt weniger als vier, beispielsweise zwei oder drei Schichten aufweisen. In einer bevorzugten Ausgestaltung kann vorgesehen sein, dass die Drucksubstratfolie aus einer B-Schicht besteht und die Verschleißschutzfolie aus zwei Schichten besteht, wobei die zwei Schichten eine Schichtreihenfolge aufweisen von einer Seite der Verschleißschutzfolie zur gegenüberliegenden Seite der Verschleißschutzfolie, die die Drucksubstratfolie kontaktiert, von B-A. In einer alternativen, bevorzugten Ausgestaltung kann vorgesehen sein, dass die Drucksubstratfolie aus zwei Schichten besteht, wobei die zwei Schichten eine Schichtreihenfolge aufweisen zwischen der ersten Seite der Drucksubstratfolie und der zweiten Seite der Drucksubstratfolie von A-B, und die Verschleißschutzfolie aus einer B-Schicht besteht.

Es konnte gezeigt werden, dass sich diese Kombination besonders gut herstellen lässt und zugleich auch besonders guten Verschleißschutz bietet und das Dekor gut dargestellt wird.

Bevorzugt kann vorgesehen sein, dass die Dekorfolie zusätzlich eine die Verschließschutzfolie kontaktierende lackhaltige Deckschicht aufweist, wobei die lackhaltige Deckschicht vorzugsweise einen Decklack aufweist ausgewählt aus der Gruppe bestehend aus Melaminharz und acrylatbasierten Kunststoffzusammensetzungen, insbesondere aus polyurethanmodifizierten Acrylat-Kunststoffzusammensetzungen.

Dadurch kann vorteilhafterweise erreicht werden, dass die Verschleißschutzeigenschaften weiter verbessert werden.

Des Weiteren erfindungsgemäß ist ein Verfahren zur Herstellung einer vorbeschriebenen Dekorfolie aufweisend die Verfahrensschritte:
a) Bereitstellen einer Drucksubstratfolie aufweisend eine erste Seite und eine der ersten Seite gegenüberliegende zweite Seite;
b) Aufbringen eines Dekors auf die zweiten Seite der Drucksubstratfolie;
c) Bereitstellen einer Verschleißschutzfolie,
d) Verbinden der Verschleißschutzfolie mit der ersten Seite der Drucksubstratfolie;
e) optional Prägen der Verschleißschutzfolie; und
f) optional lackieren der Verschleißschutzfolie.

Das Verfahren kann vorteilhafterweise besonders gut durchführbar sein und die erhaltene Dekorfolie kann eine besonders gute Verarbeitbarkeit aufweisen. Insbesondere kann durch das vorbeschriebene Verfahren die Drucksubstratfolie dünn sein, so dass insbesondere Drucker zum Aufbringen des Dekors verwendet werden können, die nur eine geringe Masse der bedruckten Bahnen erlauben, um Bahnzugschwankungen zu noch ausgleichen zu können und gleichzeitig hohe Druckgeschwindigkeiten erlauben. Gleichzeitig kann auch die Verschleißschutzfolie besonders dünn sein, weil die Drucksubstratfolie mit zum Verschleißschutz des Dekors beiträgt.

Im Detail ist zunächst in Verfahrensschritt a) das Bereitstellen einer Drucksubstratfolie aufweisend eine erste Seite und eine der ersten Seite gegenüberliegende zweite Seite vorgesehen. In Bezug auf die weiteren, bevorzugten Merkmale der Drucksubstratfolie wird auf die Beschreibung der Dekorfolie verwiesen. In einer Ausgestaltung kann die Drucksubstratfolie insbesondere als Rollenware bereitgestellt werden und für das Verfahren abgewickelt werden.

Im darauffolgenden Verfahrensschritt b) wird dann ein Dekor auf die zweite Seite der Drucksubstratfolie aufgebracht. Verfahrenstechnisch kann es sich dabei insbesondere um die Unterseite der Dekorfolie handeln. Da das Dekor später durch die Drucksubstratfolie und die Verschleißschutzfolie betrachtet wird, wird das Dekor bevorzugt im Konterdruck bzw. Reversedruck aufgebracht. Darunter ist insbesondere zu verstehen, dass das der Druck das Dekor bzw. die Dekorvorlage spiegelverkehrt wiedergibt und das erhaltene Dekor durch den Druckuntergrund, also durch die Drucksubstratfolie und die Verschleißschutzfolie betrachtet wird.

Weiterhin kann das Dekor durch einen sogenannten Direktdruck aufgebracht werden. Unter dem Begriff "Direktdruck" wird im Sinne der Erfindung das Aufbringen eines Dekors direkt auf die Drucksubstratfolie. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet- oder Laserdruck-Verfahren eingesetzt werden. Dabei kann jedes dieser Druckverfahren insbesondere im Konterdruckverfahren durchgeführt werden.

Bevorzugt kann vorgesehen sein, dass das Aufbringen des Dekors die Verwendung thermisch siegelfähige Druckfarben umfasst. Unter thermisch siegelfähigen Druckfarben sind im Sinne der vorliegenden Erfindung insbesondere auch laminierbare Tinen zu verstehen. Beispielsweise kann vorgesehen sein, dass die laminierbaren Tinten aufweist, eine strahlungshärtbare Tinte vorzugsweise in einer Menge, bezogen auf die laminierbare Tinte, von ≥ 50 Gew.-% bis ≤ 99 Gew.-%, vorzugsweise ≥ 70 Gew.-% bis ≤ 95 Gew.-%, besonders bevorzugt von ≥ 80 Gew.-% bis ≤ 90 Gew.-%, und ein thermisch aktivierbares Matrixmaterial vorzugsweise in einer Menge, bezogen auf die laminierbare Tinte, von ≥ 1 Gew.-% bis ≤ 50 Gew.-%, vorzugsweise ≥ 5 Gew.-% bis ≤ 30 Gew.-%, besonders bevorzugt von ≥ 10 Gew.-% bis ≤ 20 Gew.-%, wobei das Matrixmaterial zumindest ein thermisch aktivierbares Polymer aufweist, vorzugsweise in einer Menge, bezogen auf die laminierbare Tinte, von ≥ 1 Gew.-% bis ≤ 30 Gew.-%, vorzugsweise ≥ 5 Gew.-% bis ≤ 20 Gew.-%, besonders bevorzugt von ≥ 10 Gew.-% bis ≤ 15 Gew.-%.

Dadurch kann insbesondere erreicht werden, dass auf einen Kaschierklebstoff oder eine Kaschierschicht verzichtet werden kann.

In einer bevorzugten Ausgestaltung kann vorgesehen sein, dass die zweite Seite der Drucksubstratfolie eine A-Schicht oder eine C-Schicht ist, wobei das Aufbringen des Dekors auf die zweite Seite der Drucksubstratfolie ein direktes aufbringen auf die zweite Seite bzw. die A-Schicht oder C-Schicht umfasst.

Dadurch kann das Verfahren besonders einfach durchführbar sein, da keine weitere Behandlung der Drucksubstratfolie nötig ist.

In einer alternativen Ausgestaltung kann vorgesehen sein, die zweite Seite der Drucksubstratfolie eine B-Schicht ist, wobei des Aufbringen des Dekors auf der zweiten Seite der Drucksubstratfolie zunächst da Aufbringen eines Primers umfasst. Dadurch kann erreicht werden, dass der Druck auch gut auf der B-Schicht hält.

Im darauffolgenden Verfahrensschritt c) wird eine Verschleißschutzfolie bereitgestellt. In Bezug auf die weiteren, bevorzugten Merkmale der Verschleißschutzfolie wird auf die Beschreibung der Dekorfolie verwiesen.

In einer Ausgestaltung kann die Verschleißschutzfolie als Rollenware bereitgestellt werden und für das Verfahren abgewickelt werden. In einer alternativen Ausgestaltung kann die Verschleißschutzfolie für das Verfahren in-line hergestellt werden, beispielsweise mit einem Extruder und einer Breitschlitzdüse.

Im darauffolgenden Verfahrensschritt d) wird die Verschleißschutzfolie mit der ersten Seite der Drucksubstratfolie verbunden.

Das Verbinden kann bevorzugt unter Einwirkung von Druck und/oder Temperatur erfolgen, beispielsweise mit einem Kalander oder eine Presse. Insbesondere für den Fall, dass die Verschleißschutzfolie für das Verfahren in-line hergestellt wird, beispielsweise mit einem Extruder und einer Breitschlitzdüse, kann vorgesehen sein, dass die Verschleißschutzfolie beim abkühlen mit einem Kalander direkt mit der Drucksubstratfolie verbunden wird. Bevorzugt kann vorgesehen sein, dass das Verbinden ein Verfahren umfassend ein Kaschieren, Laminieren und/oder Versiegeln umfasst.

In einem optionalen Verfahrensschritt e) wird die Verschleißschutzfolie dann geprägt, wobei eine Oberflächenstrukturierung der Verschleißschutzfolie erzeugt wird. Beispielsweise kann eine All-Over-Struktur oder eine Struktur, die zumindest teilweise synchron zum Dekor ausgestaltet ist, erzeugt werden.

Unter dem Prägen der Verschleißschutzfolie wird dabei im Sinne der vorliegenden Erfindung auch das Prägen der gesamten Dekorfolie verstanden, wobei die Strukturierung über die Oberfläche der Verschleißschutzfolie eingebracht wird. Die Strukturierung kann dabei auch die Drucksubstratfolie erreichen.

Dadurch kann vorteilhafterweise erreicht werden, dass Strukturierungen besonders tief eingebracht werden können, ohne das Dekor zu beeinträchtigen. Somit lassen sich haptisch besser wahrnehmbare Strukturen erreichen. Ferner konnte überraschenderweise gezeigt werden, dass sich mit dem vorbeschriebenen Verfahren eine Durchprägung bis in die Dekorschicht vermeiden lässt, wodurch keine besonderen Maßnahmen erforderlich sind um das Dekor zu erhalten, weswegen das Verfahren besonders einfach durchführbar ist.

Bevorzugt kann vorgesehen sein, dass die Oberflächenstrukturierung eine maximale Tiefe aufweist in einem Bereich von größer oder gleich 50 µm bis kleiner oder gleich 200 µm, beispielsweise größer oder gleich 100 µm bis kleiner oder gleich 150 µm.

In einer Ausgestaltung kann vorgesehen sein, dass Verfahrensschritt e) nach Verfahrensschritt d) erfolgt, wobei insbesondere eine dem Verbinden bzw. Kaschieren nachgelagerte Prägevorrichtung verwendet wird. Dadurch kann vorteilhafterweise erreicht werden, dass die Prägung besonders flexibel eingebracht werden kann und insbesondere zwischen verschiedenen Strukturen einfach gewechselt werden kann. In einer alternativen Ausgestaltung kann vorgesehen sein, dass Verfahrensschritt e) zusammen mit Verfahrensschritt d) erfolgt, wobei insbesondere eine Walze des Verbindungsschrittes bzw. Kaschierschrittes die Prägung erzeugt. Dadurch kann vorteilhafterweise erreicht werden, dass kein zusätzlicher Schritt für die Erzeugung der Oberflächenstrukturierung erforderlich ist.

In einem optionalen Verfahrensschritt f) erfolgt das lackieren der Verschleißschutzfolie. Dadurch kann insbesondere ein noch besserer Verschleißschutz und zugleich eine optisch und haptisch hochwertiger anmutende Oberfläche erhalten werden. In einer Ausgestaltung kann vorgesehen sein, dass Schritt f) vor einem Aufbringen der Dekorfolie auf einen Träger erfolgt. Alternativ kann vorgesehen sein, dass Schritt f) erst nach dem Aufbringen der Dekorfolie auf einen Träger erfolgt.

In einer bevorzugten Ausgestaltung kann vorgesehen sein, das Verfahrensschritt f) nach Verfahrensschritt e) durchgeführt wird. Dadurch kann das Verfahren besonders einfach durchführbar sein.

In einer alternativen, bevorzugten Ausgestaltung kann vorgesehen sein, dass Verfahrensschritt f) vor Verfahrensschritt e) durchgeführt wird. Dadurch kann eine besonders präzise Oberflächenstrukturierung erreicht werden. Bevorzugt kann vorgesehen sein, dass vor Verfahrensschritt e) der Lack auf der Verschleißschutzfolie gehärtet wird, insbesondere zumindest teilweise gehärtet. Dadurch kann die Struktur besonders präzise eingebracht werden. Beispielsweise kann in einer bevorzugten Ausgestaltung vorgesehen sein, dass in Verfahrensschritt f) ein Lack aufgebracht und zunächst teilweise gehärtet wird, beispielsweise thermisch, und dann in Verfahrensschritt e) die Verschleißschutzfolie geprägt wird, wobei anschließend der Lack endgehärtet wird, beispielsweise mit UV-Strahlung. Dabei kann der Lack bevorzugt einen Acrylat-basierten Lack aufweisen, insbesondere einen Polyurethan-Acrylat-Lack.

Im Anschluss kann die Dekorfolie noch einen Abkühlprozess durchlaufen, wobei unterschiedliche Varianten zum Einsatz kommen können. Die Abkühlung kann beispielsweise über ein Kalanderwalzsystem (Glättwerk) erfolgen. Es kann auch eine Kühlwalze verwendet werden. Dabei können ein Luftmesser und eine Vakuumkammer für ein gleichmäßiges Anliegen der Schmelze an der Kühlwalze Sorge tragen. Ein solches Vorgehen ist beispielsweise aus der Herstellung von Cast Folien bekannt.

Des Weiteren erfindungsgemäß ist eine Vorrichtung zur Durchführung des vorbeschriebenen Verfahrens, wobei die Vorrichtung Mittel zum Durchführen desgleichen Verfahrens aufweist. Für die Vorteile der erfindungsgemäßen Vorrichtung wird explizit auf die Vorteile des erfindungsgemäßen Verfahrens Bezug genommen.

Des Weiteren erfindungsgemäß ist ein Verfahren zur Herstellung eines Dekorpaneels, aufweisend die Verfahrensschritte:
a) Bereitstellen einer vorbeschriebenen Dekorfolie;
b) Bereitstellen eines Trägers;
c) Aufbringen der Dekorfolie auf den Träger;
d) Verbinden der Dekorfolie mit dem Träger unter Ausbildung des Dekorpaneels

Der Träger kann dabei ein bahnartiger Träger oder ein plattenförmiger Träger sein.

Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einem "plattenförmigen Träger" kann dabei ferner im Sinne der vorliegenden Erfindung ein Träger verstanden werden, der durch Vereinzelung aus dem bahnartigen Träger geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein Mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

Im Detail ist zunächst Verfahrensschritt a) vorgesehen, wobei eine vorbeschriebene Dekorfolie bereitgestellt wird. Die erfindungsgemäße Dekorfolie kann dabei als Rollenware bereitgestellt werden oder in-line dem Verfahren vorgelagert hergestellt werden. In Bezug auf die weiteren, bevorzugten Merkmale der Dekorfolie wird auf die Beschreibung der Dekorfolie verwiesen.

Im darauffolgenden Verfahrensschritt b) wird ein Träger bereitgestellt. Prinzipiell kann der Träger ein Träger sein, der auch üblicherweise zur Herstellung dekorierter Wand- oder Bodenpaneele verwendet wird.

Bevorzugt kann vorgesehen sein, dass der Träger auf einer Seite bevorzugt eine siegelfähige Schicht aufweist und die Dekorfolie auf die siegelfähige Schicht aufgebracht wird.

In einer bevorzugten Ausgestaltung kann vorgesehen sein, dass die siegelfähige Schicht ein Vinyl-Copolymer aufweist, wobei das Vinyl-Copolymer bevorzugt ein Vinyl-Terpolymer umfasst, mehr bevorzugt ein polypropylenbasiertes Vinyl-Copolymer, besonders bevorzugt ein Polypropylen-Ethylen-Butylen-Copolymer. Dadurch kann erreicht werden, dass die Dekorfolie besonders einfach der siegelfähigen Schicht verbunden werden kann.

Weiter kann in der bevorzugten Ausgestaltung vorgesehen sein, dass die siegelfähige Schicht ein Vinyl-Alkylacrylat-Copolymer aufweist, bevorzugt ein Vinyl-Butylacrylat-Copolymer, besonders bevorzugt ein Ethylen-Butylacrylat.

Weiter kann in der bevorzugten Ausgestaltung vorgesehen sein, dass die siegelfähige Schicht einen Masterbatch umfasst, bevorzugt einen vinylpolymerbasierten Masterbatch, besonders bevorzugt einen LDPE-basierten Masterbatch, wobei der Masterbatch vorzugsweise weißes Pigment umfasst, bevorzugt Titandioxid. Dadurch kann vorteilhafterweise erreicht werden, dass die siegelfähige Schicht zugleich als Dekoruntergrund genutzt werden kann. Somit kann erreicht werden, dass die das Dekor der Dekorfolie besonders gut zur Geltung kommt.

Bevorzugt kann in der Ausgestaltung vorgesehen sein, dass die siegelfähige Schicht ein Feststoffmaterial aufweist, wobei das Feststoffmaterial bevorzugt ausgewählt ist aus der Gruppe bestehend aus Calciumcarbonat und Kaolin.

Bevorzugt kann in der Ausgestaltung vorgesehen sein, dass die siegelfähige Schicht das Vinyl-Copolymer in einem Bereich von größer oder gleich 50 Gew.-% bis kleiner oder gleich 100 Gew.-%, das Vinyl-Alkylacrylat-Copolymer in einem Bereich von größer oder gleich 0 Gew.-% bis kleiner oder gleich 50.-Gew.-%, den Masterbatch aufweist in einem Bereich von größer oder gleich 0 Gew.-% bis kleiner oder gleich 10 Gew.-%, und das zweite Feststoffmaterial in einem Bereich von größer oder gleich 0 Gew.-% bis kleiner oder gleich 50 Gew.-%.

Es konnte gezeigt werden, dass sich derartige Träger besonders gut zur Aufbringung der erfindungsgemäßen Dekorfolien eignen.

Im darauffolgenden Verfahrensschritt c) wird die Dekorfolie auf den Träger aufgebracht. Dabei kann die Dekorfolie, beispielsweise auf den Träger abgerollt werden.

Insbesondere für den Fall, dass der Träger keine siegelfähige Schicht aufweist, kann zudem vorgesehen sein, dass Verfahrensschritt c) zusätzlich das Aufbringen eines Kaschierklebstoffes zwischen den Träger und die Dekorfolie umfasst. Beispielsweise kann ein Kaschierklebstoff auf die Oberfläche des Trägers aufgebracht werden oder auf das Dekor der Dekorfolie. Bevorzugt kann vorgesehen sein, dass der Kaschierklebstoff ausgewählt ist aus der Gruppe bestehend aus Schmelzklebstoff und UV-härtbarem Klebstoff.

Im darauffolgenden Verfahrensschritt d) wird die Dekorfolie mit dem Träger unter Ausbildung des Dekorpaneels verbunden. Das Verbinden kann bevorzugt unter Einwirkung von Druck und/oder Temperatur erfolgen, beispielsweise mit einem Kalander oder eine Presse. Das Verbinden kann bevorzugt ein Verpressen der Dekorfolie mit dem Träger umfassen.

In einer bevorzugten Ausgestaltung kann vorgesehen sein, dass die Dekorfolie nach Verfahrensschritt d) zusätzlich mit einer die Verschließschutzfolie kontaktierenden lackhaltigen Deckschicht versehen wird, wobei die lackhaltige Deckschicht vorzugsweise einen Decklack aufweist ausgewählt aus der Gruppe bestehend aus Melaminharz und acrylatbasierten Kunststoffzusammensetzungen, insbesondere aus polyurethanmodifizierten Acrylat-Kunststoffzusammensetzungen. Bevorzugt kann das vorgesehen sein, wenn die Dekorfolie selbst nicht mit einer lackhaltigen Deckschicht versehen war.

Dadurch kann vorteilhafterweise erreicht werden, dass die Verschleißschutzeigenschaften weiter verbessert werden.

In einem weiteren Schritt kann dann der mit der Dekorfolie versehene Träger durch geeignete mechanische Verfahren in einzelne Paneele aufgeteilt werden. Dies kann beispielsweise durch ein Schneiden nach regelmäßigen Abständen oder nach regelmäßigen Zeiten erfolgen. Bevorzugt können durch diesen Verfahrensschritt gleichlange, geschnittene Paneele erzeugt werden. Zusätzlich können die Kanten der geschnittenen Paneele profiliert werden, insbesondere mit Verriegelungsmitteln.

Des Weiteren erfindungsgemäß ist ein Dekorpaneel, hergestellt nach dem erfindungsgemäßen Verfahren. In Bezug auf die weiteren, bevorzugten Merkmale des Dekorpaneels wird auf die Beschreibung der Verfahren und der Dekorfolie verwiesen. Für die Vorteile der erfindungsgemäßen Dekorpaneels wird ebenso explizit auf die Vorteile der erfindungsgemäßen Verfahren und auf die Vorteile der erfindungsgemäßen Dekorfolie Bezug genommen.

Die Erfindung ist nachfolgend anhand der Figuren weiter erläutert. Die Figuren zeigen mögliche Ausgestaltung der Erfindung. Prinzipiell sind jedoch auch Kombinationen oder Abwandlungen der Ausgestaltung im Rahmen der Erfindung möglich.
Fig. 1 zeigt schematisch den Schichtaufbau einer Ausführungsform der erfindungsgemäßen Dekorfolie.
Fig. 2 zeigt schematisch den Schichtaufbau einer Weiterbildung der erfindungsgemäßen Dekorfolie.
Fig. 3 zeigt schematisch den Schichtaufbau eines erfindungsgemäßen Dekorpaneels.

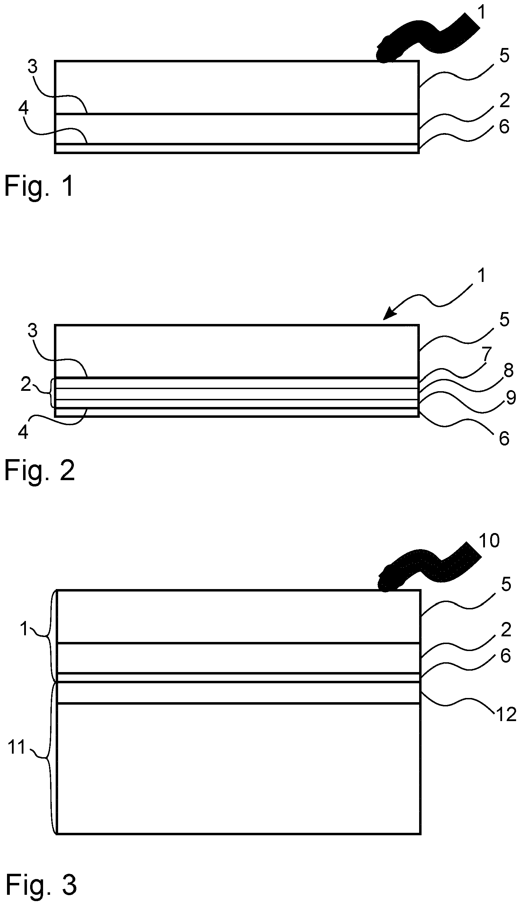

Im Detail zeigt Fig. 1 schematisch den Querschnitt einer Ausführungsform der erfindungsgemäßen Dekorfolie 1. Die Dekorfolie 1 weist eine Drucksubstratfolie 2 mit einer ersten Seite 3 und einer der ersten Seite 3 gegenüberliegenden zweiten Seite 4 auf. Zudem weist die Dekorfolie 1 eine Verschleißschutzfolie 5 auf, wobei die Verschleißschutzfolie 5 die erste Seite 3 der Drucksubstratfolie 2 kontaktiert. Zudem ist auf die zweite Seite 4 der Drucksubstratfolie 2 ein Dekor 6 aufgebracht.

Die gezeigte Dekorfolie 1 wurde hergestellt nach dem erfindungsgemäßen Verfahren, wobei die Drucksubstratfolie 2 bereitgestellt wurde und das Dekor 6 auf die zweite Seite 4 der Drucksubstratfolie 2 aufgebracht wurde. In einem weiteren Schritt wurde die Verschleißschutzfolie 5 bereitgestellt und anschließend mit der ersten Seite 3 der Drucksubstratfolie 2 verbunden.

Fig. 2 zeigt schematisch den Querschnitt einer Weiterbildung der erfindungsgemäßen Dekorfolie 1. Die gezeigt Dekorfolie 1 weist dabei insbesondere eine Drucksubstratfolie mit mehreren Schichten 7, 8, 9 auf. Die mehrere Schichten weisen dabei eine Schichtreihenfolge auf, die beispielsweise zwischen der ersten Seite 3 der Drucksubstratfolie 2 und der zweiten Seite 4 der Drucksubstratfolie 2, ausgewählt ist aus B-B-B, A-B-C, A-B-A, A-B-B, A-B-C-B-A, A-B-C-B-B, und A-B-C-B-C. Beispielsweise ist bei der Schichtreihenfolge A-B-C die Schicht 7 eine A-Schicht, Schicht 8 eine B-Schicht und Schicht 9 eine C-Schicht.

Fig. 3 zeigt schematisch den Querschnitt eines erfindungsgemäßen Dekorpaneels 10 hergestellt nach dem erfindungsgemäßen Verfahren, wobei die Dekorfolie 1 aus Fig. 1 bereitgestellt wurde und ein Träger 11 aufweisend eine siegelfähige Schicht 12 bereitgestellt wurde. Die Dekorfolie 1 wurde auf den Träger 11 aufgebracht und unter Ausbildung des Dekorpaneels 10 mit dem Träger 11 verbunden wurde.

### Bezugszeichen:

- 1: Dekorfolie
- 2: Drucksubstratfolie
- 3: erste Seite
- 4: zweite Seite
- 5: Verschleißschutzfolie
- 6: Dekor
- 7: Schicht der Mehrzahl von Schichten
- 8: Schicht der Mehrzahl von Schichten
- 9: Schicht der Mehrzahl von Schichten
- 10: Dekorpaneel
- 11: Träger
- 12: siegelfähige Schicht

## Patentansprüche

1. Dekorfolie, insbesondere für ein dekoriertes Wand- oder Bodenpaneel, **dadurch gekennzeichnet, dass** die Dekorfolie eine Drucksubstratfolie mit einer ersten Seite und einer der ersten Seite gegenüberliegenden zweiten Seite, und eine die erste Seite der Drucksubstratfolie kontaktierende Verschleißschutzfolie aufweist, wobei auf die zweite Seite der Drucksubstratfolie zumindest teilweise ein Dekor aufgebracht ist.

2. Dekorfolie nach Anspruch 1, wobei die Drucksubstratfolie und die Verschließschutzfolie jeweils ein erstes Polymer aufweisen, wobei das erstes Polymer bevorzug ein Vinylpolymer aufweist, mehr bevorzugt ein propylenbasiertes Vinylpolymer, besonders bevorzugt ein Polypropylen-Copolymer.

3. Dekorfolie nach einem der Ansprüche 1 oder 2, wobei die Drucksubstratfolie zumindest eine B-Schicht aufweist, wobei die B-Schicht bevorzugt das erstes Polymer aufweist.

4. Dekorfolie nach einem der Ansprüche 1 bis 3, wobei die Drucksubstratfolie zumindest eine Schicht aufweist, ausgewählt aus der Gruppe bestehend aus einer A-Schicht und einer C-Schicht, wobei die A-Schicht ein zweites Polymer aufweist und die C-Schicht ein drittes Polymer aufweist.

5. Dekorfolie nach Anspruch 4, wobei das zweite Polymer ein Vinylpolymer aufweist, bevorzugt ein Vinyl-Copolymer, mehr bevorzugt ein Vinyl-Copolymer ausgewählt aus der Gruppe bestehend aus einem propylenbasiertem Vinyl-Copolymer, einem Vinyl-Terpolymer und Mischungen davon, besonders bevorzugt ausgewählt aus der Gruppe bestehend aus einem Propylen-Ethylen-Random-Copolymer, einem Polypropylen-Ethylen-Butylen-Copolymer, einem Ethylen-Propylen-Dien-Monomer Kautschuk, und Mischungen davon.

6. Dekorfolie nach einem der Ansprüche 4 oder 5, wobei das dritte Polymer einen Haftvermittler aufweist, bevorzugt einen Haftvermittler ausgewählt aus der Gruppe bestehend aus einem Maleinsäureanhydrid gepfropften Polymer, einem ethylenbasiertem Copolymer und Mischungen davon, besonders bevorzugt ausgewählt aus der Gruppe bestehend aus einem Maleinsäureanhydrid gepfropfte Polypropylen, einem Maleinsäureanhydrid gepfropfte Polyethylen, einem Ethyl-Acrylsäure-Copolymer, einem Ethyl-(Meth)acrylat, einem Ethyl-Butylacrylat, einem Ethyl-Vinylacetat und Mischungen davon.

7. Dekorfolie nach einem der Ansprüche 3 bis 6, wobei die Drucksubstratfolie eine Mehrzahl von Schichten aufweist und die Mehrzahl von Schichten eine Schichtreihenfolge aufweist zwischen der ersten Seite der Drucksubstratfolie und der zweiten Seite der Drucksubstratfolie, ausgewählt aus den Schichtreihenfolgen A-B, B-A, B-B-B, A-B-C, A-B-A, A-B-B, A-B-C-B-A, A-B-C-B-B, und A-B-C-B-C, wobei die Schichtreihenfolge bevorzugt ausgewählt ist aus den Schichtreihenfolgen B-B-B, A-B-C, und A-B-A.

8. Dekorfolie nach einem der Ansprüche 1 bis 7, wobei das auf die zweite Seite der Drucksubstratfolie zumindest teilweise aufgebrachte Dekor, ein eine Dekorvorlage nachbildendes Dekor umfasst.

9. Dekorfolie nach einem der Ansprüche 1 bis 8, wobei die Verschleißschutzfolie zumindest eine B-Schicht aufweist, wobei die B-Schicht bevorzugt das erstes Polymer aufweist.

10. Dekorfolie nach einem der Ansprüche 1 bis 9, wobei die Verschleißschutzfolie eine Oberflächenstrukturierung aufweist.

11. Verfahren zur Herstellung einer Dekorfolie nach einem der Ansprüche 1 bis 10 aufweisend die Verfahrensschritte:
a) Bereitstellen einer Drucksubstratfolie aufweisend eine erste Seite und eine der ersten Seite gegenüberliegende zweite Seite;
b) Aufbringen eines Dekors auf die zweiten Seite der Drucksubstratfolie;
c) Bereitstellen einer Verschleißschutzfolie,
d) Verbinden der Verschleißschutzfolie mit der ersten Seite der Drucksubstratfolie;
e) optional Prägen der Verschleißschutzfolie; und
f) optional lackieren der Verschleißschutzfolie.

12. Vorrichtung zur Durchführung des Verfahrens nach Anspruch 11, wobei die Vorrichtung Mittel zum Durchführen des Verfahrens nach Anspruch 11 aufweist.

13. Verfahren zur Herstellung eines Dekorpaneels, aufweisend die Verfahrensschritte:
a) Bereitstellen einer Dekorfolie nach einem der Ansprüche 1 bis 10;
b) Bereitstellen eines Trägers;
c) Aufbringen der Dekorfolie auf den Träger;
d) Verbinden der Dekorfolie mit dem Träger unter Ausbildung des Dekorpaneels.

14. Verfahren nach Anspruch 13, wobei der Träger auf einer Seite bevorzugt eine siegelfähige Schicht aufweist und die Dekorfolie auf die siegelfähige Schicht aufgebracht wird.

15. Dekorpaneel hergestellt nach dem Verfahren nach Anspruch 14.
